(19) Europäisches Patentamt / European Patent Office / Office européen des brevets

(11) **EP 4 375 786 B1**

(12) **EUROPEAN PATENT SPECIFICATION**

(45) Date of publication and mention
of the grant of the patent:
**22.10.2025  Bulletin 2025/43**

(21) Application number: **23205824.8**

(22) Date of filing: **25.10.2023**

(51) International Patent Classification (IPC):
**G05D 1/225** (2024.01)

(52) Cooperative Patent Classification (CPC):
**B63B 79/20; G05D 1/225; G05D 1/226;**
G05D 2101/10; G05D 2107/27; G05D 2109/34

(54) **SHIP MONITORING SYSTEM, CONTROL METHOD FOR SHIP MONITORING SYSTEM, AND CONTROL PROGRAM FOR SHIP MONITORING SYSTEM**

SCHIFFSÜBERWACHUNGSSYSTEM, STEUERUNGSVERFAHREN FÜR SCHIFFSÜBERWACHUNGSSYSTEM UND STEUERUNGSPROGRAMM FÜR SCHIFFSÜBERWACHUNGSSYSTEM

SYSTÈME DE SURVEILLANCE DE NAVIRE, PROCÉDÉ DE COMMANDE POUR SYSTÈME DE SURVEILLANCE DE NAVIRE ET PROGRAMME DE COMMANDE POUR SYSTÈME DE SURVEILLANCE DE NAVIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.10.2022  JP 2022170896**
**26.07.2023  JP 2023121459**

(43) Date of publication of application:
**29.05.2024  Bulletin 2024/22**

(73) Proprietors:
• **Nabtesco Corporation**
**Tokyo 102-0093 (JP)**
• **Tokyo Keiki Inc.**
**Tokyo 144-8551 (JP)**

(72) Inventors:
• **Kawatani, Toru**
**Tokyo, 102-0093 (JP)**
• **Tanaka, Hiroki**
**Tokyo, 102-0093 (JP)**
• **Sakakibara, Takatsugu**
**Tokyo, 102-0093 (JP)**
• **Kawasaki, Naoyuki**
**Tokyo, 102-0093 (JP)**
• **Yamaguchi, Ryo**
**Tokyo, 144-8551 (JP)**

• **Uetake, Hironobu**
**Tokyo, 144-8551 (JP)**
• **Shimada, Naoki**
**Tokyo, 144-8551 (JP)**
• **Abe, Kenta**
**Tokyo, 144-8551 (JP)**

(74) Representative: **Grünecker Patent- und Rechtsanwälte**
**PartG mbB**
**Leopoldstraße 4**
**80802 München (DE)**

(56) References cited:
• **OTA HIROKI ET AL: "Remote ship control system using Virtual Reality", 2022 IEEE INTERNATIONAL CONFERENCE ON SYSTEMS, MAN, AND CYBERNETICS (SMC), IEEE, 9 October 2022 (2022-10-09), pages 2223 - 2228, XP034229718, DOI: 10.1109/ SMC53654.2022.9945082**
• **CHEN SHIJUN ET AL: "State Compensation for Maritime Autonomous Surface Ships' Remote Control", JOURNAL OF MARINE SCIENCE AND ENGINEERING, vol. 11, no. 2, 1 February 2023 (2023-02-01), pages 450, XP093149250, ISSN: 2077-1312, DOI: 10.3390/jmse11020450**

**Description**

The present invention relates to a ship monitoring system, a control method for a ship monitoring system, and a control program for a ship monitoring system.

For example, patent literature 1 discloses a navigation information display apparatus provided on a ship and having a display unit that displays a map and the position of the ship. This apparatus includes a ship position detection apparatus, an orientation detection apparatus, and an image display that displays an image determined by detection results from these apparatuses. This image display displays, on a virtual water surface, an image that supports arrival at a target, the image including the current position of the ship, a target mark, and a plurality of equidistant lines. Further, patent literature 2 discloses a virtual reality remote ship control systems that allows a helmsman on shore to steer a ship by providing a scenery of a navigational bridge.

[Patent Literature 1] JP 2012-018065

[Patent Literature 2] Hiroki Ota et al: "Remote ship control system using Virtual Reality", 2022 IEEE International Conference on Systems, Man, and Cybernetics (SMC), Prague, Czech Republic, 2022, pp. 2223-2228

Shortage of sailors is expected to be alleviated by remote ship maneuvering, whereby ships at sea or on water are controlled by shore-ship communication from a ship maneuvering center on land. In sea areas where communication capacity is low, however, there is a time lag from the detection of the state of a ship and the execution of a ship maneuvering command on the ship due to restriction on communication speed between land and ship. In this way, there is a problem in that remote ship maneuvering becomes difficult if a communication time lag is large.

The present invention addresses the issue described above, and a purpose thereof is to provide a technology for a ship monitoring system capable of reducing impacts from a communication time lag.

This is achieved by the features of the independent claims. Further features and advantages of the present invention are set forth in dependent claims.

Optional combinations of the aforementioned constituting elements, and mutual substitution of constituting elements and implementations of the present invention between methods, apparatuses, programs, transitory or non-transitory recording mediums storing the program, systems, etc. may also be practiced as additional embodiments of the present invention.

Embodiments will now be described by way of examples only, with reference to the accompanying drawings which are meant to be exemplary, not limiting and wherein like elements are numbered alike in several figures in which:

Fig. 1 is a diagram schematically showing a ship to which the ship monitoring system according to the first embodiment of the present invention is applied;

Fig. 2 is a block diagram schematically showing the ship monitoring system of Fig. 1;

Fig. 3 is a diagram schematically showing the time lag of the ship monitoring system of Fig. 1;

Fig. 4 is a timing chart showing an example of the operation of predicting the second motion state of the ship monitoring system of Fig. 1;

Fig. 5 is an explanatory diagram schematically showing the operation of the second state prediction unit of Fig. 1;

Fig. 6 is a flowchart showing an example of the operation of the shipboard information processing apparatus of Fig. 1;

Fig. 7 is a flowchart showing an example of the operation of the support information processing apparatus of Fig. 1;

Fig. 8 is a block diagram schematically showing the ship monitoring system of the first variation;

Fig. 9 is an explanatory diagram schematically showing the operation of a third state prediction unit of the first variation;

Fig. 10 is a timing chart showing an example of the operation of the ship monitoring system of the first variation for predicting the third motion state;

Fig. 11 is a flowchart showing an example of the operation of the shipboard information processing apparatus of the first variation; and

Fig. 12 is a flowchart showing an example of the operation of the support information processing apparatus of the first variation.

The invention will now be described by reference to the preferred embodiments. This does not intend to limit the scope of the present invention, but to exemplify the invention. Embodiments, which do not relate to the prediction and display of a third motion state, are not encompassed by the wording of the claims but are considered as useful for understanding the invention.

Of the embodiments disclosed in this specification, those composed of a plurality of objects may be such that the plurality of objects may be integrated, or, conversely, an object may be divided into a plurality of objects. Regardless of whether objects are integrated or not, they may be configured so as to achieve the purpose of the invention.

Of the embodiments disclosed in this specification, those in which a plurality of functions are provided in a distributed manner may be such that some or all of the plurality of functions may be aggregated, or, conversely, those in which a plurality of functions are aggregated may be such that some or all of the plurality of functions are distributed. Regardless of whether functions are aggregated or distributed, they may be configured so as to achieve the purpose of the invention.

Further, separate constituting elements that have something in common are distinguished by adding "first, second" or the like at the beginning of the name. These numerals are omitted when the constituting elements are referred to collectively. Although terms including ordinal numbers such as first and second are used to describe various constituting elements, these terms are used only for the purpose of distinguishing one constituting element from other constituting elements, and the constituting elements shall not be limited by these terms.

A ship monitoring system according to an embodiment includes: a shipboard information processing apparatus provided on a ship and including a shipboard communication unit and an information acquisition unit that acquires ship motion information related to a ship motion of the ship; and a support information processing apparatus provided outside the ship and including: a support side communication unit capable of communicating with the shipboard communication unit; a time lag identification unit; and a state prediction unit. The time lag identification unit identifies a time from transmission of the ship motion information from the shipboard communication unit to reception of the ship motion information by the support side communication unit as a reception time lag. The state prediction unit inputs the ship motion information and the reception time lag to a ship motion model related to the ship motion of the ship to predict a second motion state of the ship ahead of a first motion state of the ship indicated by the ship motion information by a period of time based on the reception time lag.

According to this configuration, it is possible to know the second motion state, i.e., substantially the current state, of the ship when the ship motion information is received so that impacts from a rection time lag can be reduced.

By way of one example, the shipboard information processing apparatus includes an engine control unit that controls a propulsion machine or a rudder machine provided in the ship, based on a ship maneuvering command received via the shipboard communication unit. The support information processing apparatus transmits the ship maneuvering command to the shipboard communication unit via the support side communication unit. The time lag identification unit identifies a time from transmission of the ship maneuvering command from the support side communication unit to reception of the ship maneuvering command by the shipboard communication unit as a transmission time lag. The state prediction unit uses the transmission time lag to predict a third motion state of the ship ahead of the first motion state by a total time derived from adding up the reception time lag and the transmission time lag. According to this configuration, it is possible to know the third motion state of the ship when the transmitted ship maneuvering command is received on the ship side so that impacts from a transmission time lag can be reduced.

By way of one example, the time lag identification unit identifies a time from the transmission of the ship maneuvering command from the support side communication unit to execution of control by the engine control unit based on the ship maneuvering command received by the support side communication unit as the transmission time lag. In this case, the reception time lag and the transmission lag can be identified on the side of the support side information processing apparatus.

By way of one example, the support information processing apparatus further includes an information display unit that displays the second motion state. In this case, the ship maneuvering operator of the support information processing apparatus can maneuver the ship while viewing the second motion state.

By way of one example, when the ship motion model is updated, the state prediction unit predicts the second motion state by using the updated ship motion model. In this case, a prediction is made by using the updated ship motion model so that reduction in prediction accuracy caused by a variation in the ship motion model can be suppressed.

By way of one example, the ship monitoring system updates the ship motion model by using the ship maneuvering command. In this case, the ship motion model changes in accordance with the ship maneuvering command. Since the ship motion model is updated by using the ship maneuvering command so that the prediction error of the ship motion model is suppressed.

[First embodiment]

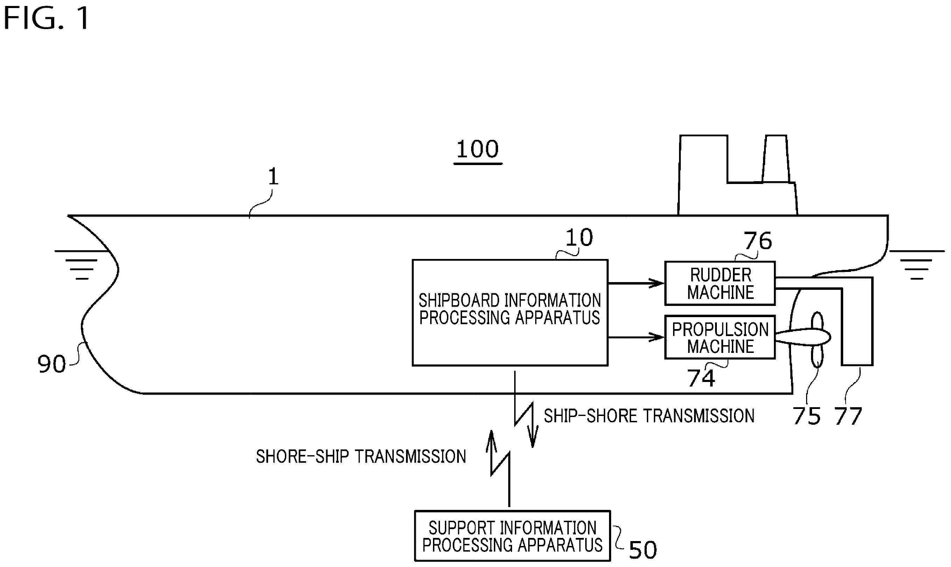

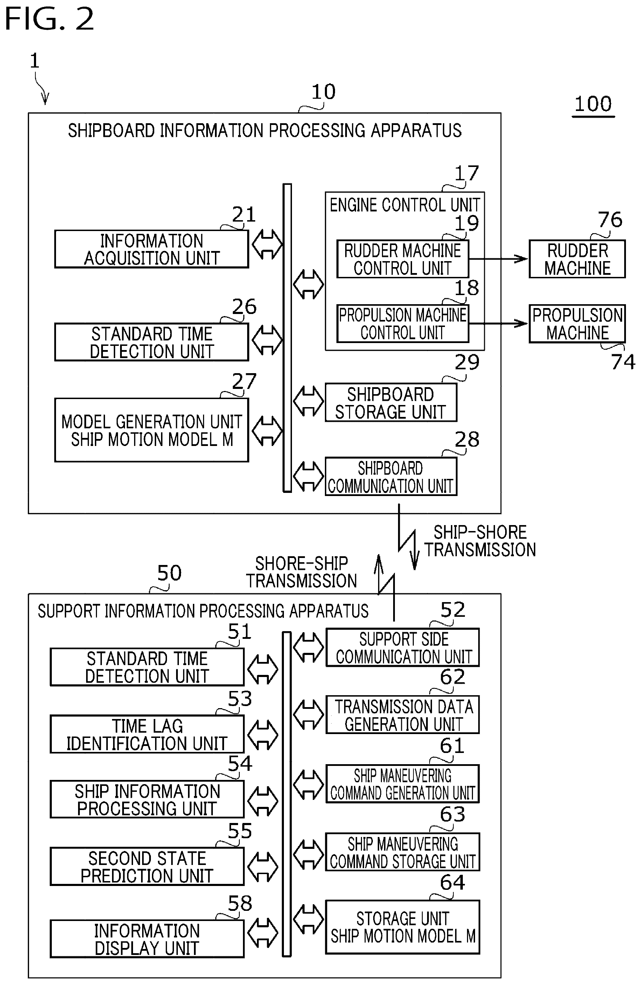

Hereinafter, a description will be given of a ship monitoring system 100 according to the first embodiment of the present invention with reference to Figs. 1 to 7. Fig. 1 is a diagram schematically showing a ship 1 to which the ship monitoring system 100 according to the first embodiment of the present invention is applied. Fig. 2 is a block diagram schematically showing the ship monitoring system 100.

As shown in Figs. 1 and 2, the ship monitoring system 100 of the embodiment includes a shipboard information processing apparatus 10 and a support information processing apparatus 50. The shipboard information processing apparatus 10 is provided on the ship 1 and includes a shipboard communication unit 28 and an information acquisition unit 21 that acquires ship motion information related to the ship motion of the ship 1. The support information processing apparatus 50 is provided outside the ship 1 and includes: a support side communication unit 52 capable of communicating with the shipboard communication unit 28; a time lag identification unit 53; and a state prediction unit 55. The support information processing apparatus 50 of this example is provided on land. The support information processing apparatus 50 may be provided other than on land, and, for example, on a ship other than the ship 1, a flight vehicle, etc.

The time lag identification unit 53 identifies the time from the transmission of the ship motion information from the shipboard communication unit 28 to the reception of the ship motion information by the support side communication unit 52 as a reception time lag. The state prediction unit 55 inputs the ship motion information and the reception time lag to a ship motion model related to the ship motion of the ship 1 to predict the second motion state of the ship 1 ahead of the first motion state of the ship 1 indicated by the ship motion information by a period of time based on the reception time lag. The period of time based on the reception time lag may be a period of time of the reception time lag or a period of time obtained by applying a predetermined calculation on the period of time of the reception time lag. In the following description, an example in which the period of time based on the reception time lag is the period of time of the reception time lag is shown.

The ship 1 mainly includes a hull 90, the shipboard information processing apparatus 10, a propulsion machine 74, and a rudder machine 76, and is configured to be remotely maneuvered by an onshore ship maneuvering operator via the support information processing apparatus 50.

The shipboard information processing apparatus 10 includes an engine control unit 17 that controls the propulsion machine 74 or the rudder machine 76 provided in the ship 1, based on the ship maneuvering command N received via the shipboard communication unit 28. The engine control unit 17 controls at least one of the rotational speed of the propulsion machine 74 of the ship 1 or the steering angle of a rudder 77 by using the ship maneuvering command N transmitted from the support information processing apparatus 50. The ship maneuvering command N includes a command rotational speed $Ne\_t$ of the propulsion machine 74 and a command steering angle $Ae\_t$. The engine control unit 17 includes: a propulsion machine control unit 18 that performs propulsion machine control that brings the actual rotational speed $Ne$ of the propulsion machine 74 close to the command rotational speed $Ne\_t$; and a rudder machine control unit 19 that performs steering control that brings the actual steering angle $Ae\_t$ of the rudder machine 76 close to the command steering angle $Ae\_t$.

The ship monitoring system 100 uses "ship-shore transmission" to transmit data from the shipboard information processing apparatus 10 (hereinafter referred to simply as "ship side") on the side of the ship 1 to the support information processing apparatus 50 on the land side (hereinafter simply referred to as "land side") and "shore-ship transmission" to transmit data from the land side to the ship side.

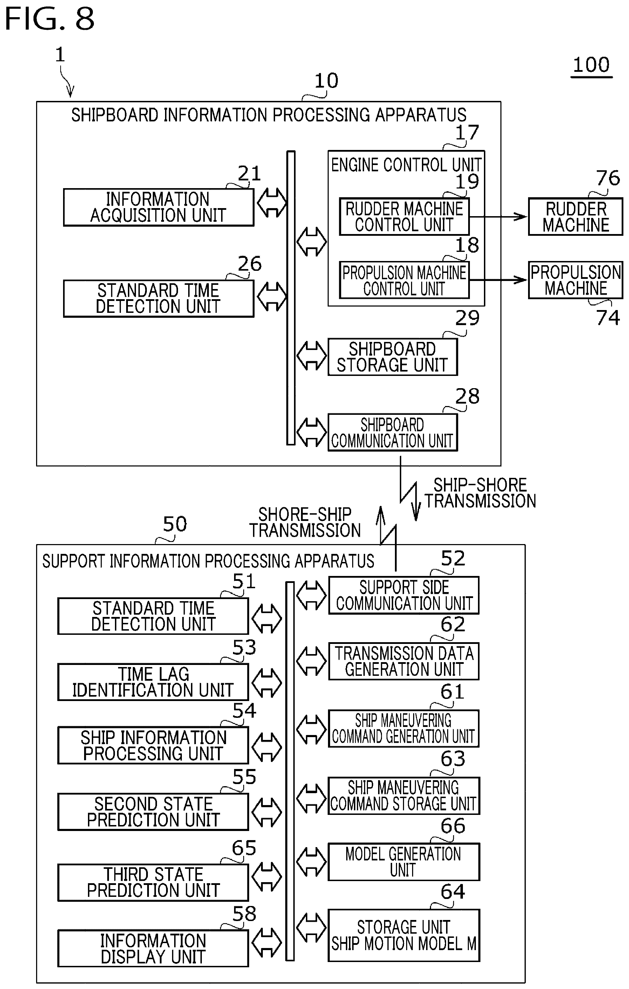

The blocks depicted in the block diagrams of Fig. 2 and Fig. 8 described later are implemented in hardware by devices/electronic circuits/mechanical apparatuses exemplified by a processor, a CPU, and a memory of a computer, and in software by a computer program, etc. The figures depict functional blocks implemented by the cooperation of these elements. Therefore, it will be understood by those skilled in the art that the functional blocks may be implemented in a variety of manners by a combination of hardware and software.

Further, the shipboard information processing apparatus 10 includes: the information acquisition unit 21; a standard time detection unit 26; a model generation unit 27 that generates a ship motion model M; a shipboard communication unit 28 that performs ship-shore transmission and receives data transmitted in shore-ship transmission; and a shipboard storage unit 29 that stores transmission data and reception data. The standard time detection unit 26 acquires the ship side standard time of the ship 1.

The information acquisition unit 21 acquires ship motion information J including at least one of ship speed, turning speed, propulsion machine rotational speed, or steering angle. In addition to the ship motion information J, the information acquisition unit 21 may further acquire environmental information including at least one of the tidal current speed, tidal current direction, wave direction, wind speed, or wind direction. The information acquisition unit 21 may acquire ship motion information J including the swing angle of the hull in addition to at least one of the ship speed, turning speed, propulsion machine rotational speed, or steering angle. Ship motion information is an influencing factor that affects the ship motion of the ship 1.

The support information processing apparatus 50 includes a standard time detection unit 51, a support side communication unit 52, a time lag identification unit 53, a ship information processing unit 54, a second state prediction unit 55, an information display unit 58, a ship maneuvering command generation unit 61, a transmission data generation unit 62, a ship maneuvering command storage unit 63, and a storage unit 64. The support side communication unit 52 performs shore-ship transmission and receives the ship motion information J transmitted in ship-shore transmission.

The ship information processing unit 54 stores the ship motion information J in a chronological order. Further, the ship information processing unit 54 functions as a state acquisition unit that acquires the past state of the ship 1 (hereinafter referred to as "first motion state P") indicated by the ship motion information J. The second state prediction unit 55 uses a ship motion model related to the ship motion of the ship 1, the ship motion information J, and the reception time lag $\Delta t2$ to predict the state of the ship 1 (hereinafter referred to as "second motion state Q") ahead of the first motion state P of the ship 1 indicated by the ship motion information J by a period of time based on the reception time lag $\Delta t2$.

The time lag is a time gap that occurs between the transmission side and the reception side. The transmission time lag is a delay time elapsed since the start of transmission of transmission command data from the land side until the data has been completely received on the ship side and reflected in ship maneuvering. The reception time lag is a delay time elapsed since the start of transmission of the ship movement information J from the ship side until the information is completely received on the land side and reflected in information display. Therefore, the time lag is a time difference from the start of transmission of data to the completion of reception.

The support information processing apparatus 50 displays the ship motion information J or the second motion state Q on the information display unit 58. The ship maneuvering command generation unit 61 generates a ship maneuvering command N based on the ship maneuvering operation of a ship maneuvering operator on the land side. The transmission data generation unit 62 generates transmission data including the ship maneuvering command N, standard time, and other data. The ship maneuvering command storage unit 63 stores the ship maneuvering command N in a chronological order. The storage unit 64 stores the ship motion model M.

The support information processing apparatus 50 predicts the state of the ship 1 occurring when the ship 1 is being maneuvered (hereinafter referred to as "second motion state Q"), by using the ship motion information acquired from the shipboard information processing apparatus 10 and the reception time lag. The support information processing apparatus 50 displays the second motion state Q on the information display unit 58. This allows the ship maneuvering operator on the land side to maneuver the ship while viewing the second motion state Q. It should be noted that the "present" of the second motion state Q means the point of time of maneuvering (= the present point of time K) and may include an error with respect to the present in a strict sense.

An explanation of the time lag will be given. When the maneuvering command N for maneuvering the ship 1 is transmitted from the land side to maneuver the ship 1 remotely, there is a time lag in communication for transmitting data between the ship side and the land side. In the case emergency maneuvering is required, there is a risk that ship maneuvering is disrupted due to this time lag. When the ship 1 sails in an open sea or the like away from the land, in particular, a good communication state may not be obtained, and the communication speed may be reduced as compared with the case where the ship sails in a near sea or the like. When the communication speed is low, the time lag increases, and the risk of ship maneuvering disturbance due to the time lag increases. In order to realize stable remote ship maneuvering, it is desirable to reduce impacts from a time lag.

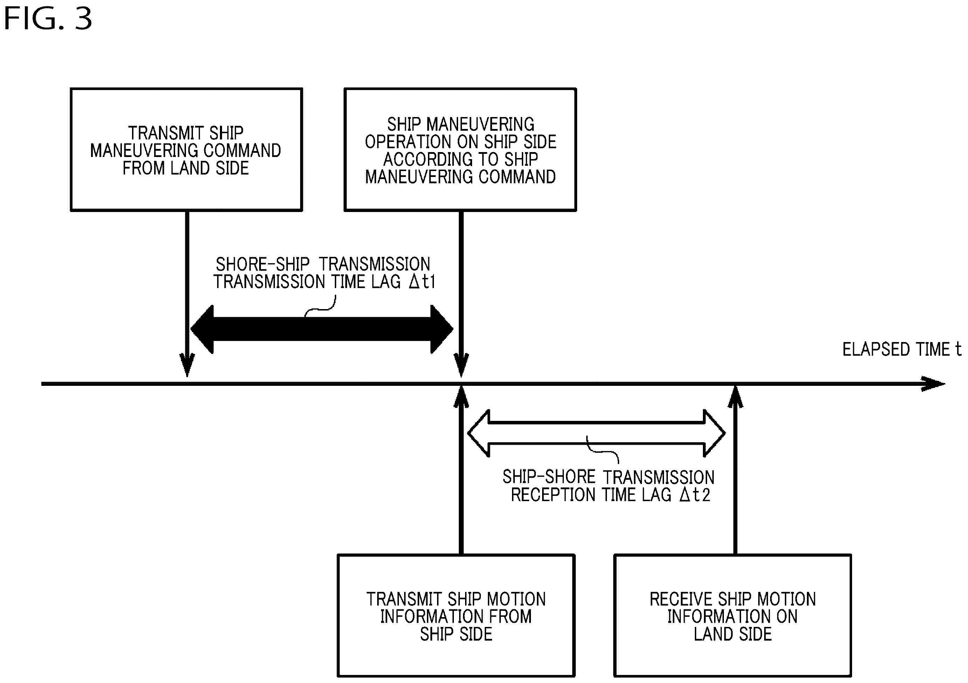

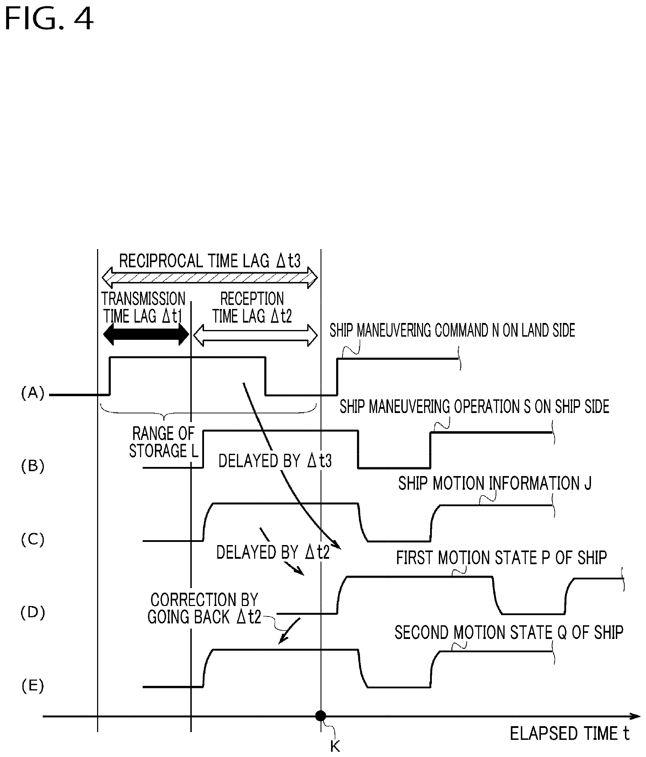

Reference is made to Fig. 3. Fig. 3 is a diagram showing the time lag of the ship monitoring system 100. Fig. 3 shows events on the land side and the ship side in a chronological order along the elapsed time t. As shown in Fig. 3, the time lag includes a time lag in shore-ship transmission (hereinafter referred to as "transmission time lag $\Delta t1$") and a time lag in ship-shore transmission (hereinafter referred to as "reception time lag $\Delta t2$").

The transmission time lag $\Delta t1$ is a time elapsed from the start of transmission of data and the completion of reception when the shipboard information processing apparatus 10 receives data transmitted from the support information processing apparatus 50. In particular, the transmission time lag $\Delta t1$ is a time identified by the time lag identification unit 53 as elapsing from the transmission of the ship maneuvering command N from the support side communication unit 52 to the reception of the ship maneuvering command N by the shipboard communication unit 28. In the example of Fig. 3, when the ship maneuvering command N is transmitted from the land side, the ship maneuvering operation S of the ship 1 according to the ship maneuvering command N received on the ship side is delayed by the transmission time lag $\Delta t1$ from when the ship maneuvering command N is transmitted. The ship maneuvering operation S of the ship 1 is an operation to control at least one of the rotational speed of the propulsion machine 74 of the ship 1 or the steering angle of the rudder machine 76, based on the ship maneuvering command N.

The reception time lag $\Delta t2$ is a time elapsed from the start of transmission of data and the completion of reception when the support information processing apparatus 50 on the land side receives the data transmitted from the shipboard information processing apparatus 10 on the ship side. The ship side transmits ship motion information J indicating the state of the ship 1 such as the ship position, ship speed, and bow direction of the ship 1 as needed. In the example of Fig. 3, when the ship motion information J is transmitted from the ship side and received on the land side, the information display unit 58 displays the past ship motion information J that is delayed by the reception time lag $\Delta t2$.

When the time lag is not considered, the information display unit 58 on the land side displays the first motion state that is a past state of the ship 1, so that the ship maneuvering operator on the land side will be maneuvering the ship while imagining the current state ahead of the displayed first motion state by the reception time lag $\Delta t2$. In this background, the support information processing apparatus 50 includes the second state prediction unit 55 that predicts, in consideration of the time lag, the second motion state Q of the ship 1 at the time of ship maneuvering.

Referring to Fig. 4, the operation of the second state prediction unit 55 will be described. Fig. 4 is a timing chart showing an example of the operation of the second state prediction unit 55 of the ship monitoring system 100. Fig. 4 shows the timing of events on the land side and the ship side in a waveform diagram along the elapsed time t. In this figure, the position of the edge of each waveform indicates a timing gap, and the high/low levels of the waveform are meaningless.

An explanation will be given in accordance with the timing chart. First, the land side transmits the ship maneuvering command N at the point of time shown in (A) in Fig. 4 by shore-ship transmission. Next, the ship side receives the ship maneuvering command N at the point of time of (B) in Fig. 4 delayed by the transmission time lag $\Delta t1$ and

executed the ship maneuvering operation S based on the ship maneuvering command N. As a result of this ship maneuvering operation S, the ship motion information J such as the ship position, ship speed, and bow direction of the ship 1 changes as shown in (C) in Fig. 4. Since the ship motion information J does not change abruptly but changes gradually, (C) in Fig. 4 shows the edge in a curve. The ship motion information J is transmitted to the land side by ship-shore transmission.

The land side receives the ship motion information J delayed by the reception time lag Δt2. The ship motion information J received is information delayed at the time of reception (=the present point of time K) from the transmission on the ship side, and, hereinafter, the state represented by the ship movement information J received is referred to as the first motion state P. That is, the first motion state P shown in (D) in Fig. 4 is a past state of the ship 1 preceding the reception by the reception time lag Δt2. As a result, the first motion state P is displayed on the information display unit 58.

Further, the second state prediction unit 55 predicts the second motion state Q that occurs when the reception time lag Δt2 elapses, by using the first motion state P shown in (D) in Fig. 4 and the reception time lag Δt2. The information display unit 58 displays the predicted second motion state Q. (E) in Fig. 4 shows the second motion state Q.

The operation of predicting the second motion state Q will be described. The second motion state Q can be predicted by using the ship motion model M and influencing factors (=ship motion information) that affect the ship motion of the ship 1. The model generation unit 27 of the shipboard information processing apparatus 10 generates a ship motion model M including influencing factors that affect the ship motion of the ship 1. The influencing factors include: basic information related to the ship 1 including at least one of the ship speed, turning speed, propulsion machine rotational speed, or steering angle; environmental information including at least one of the tidal current speed, tidal current direction, wave direction, wind speed, or wind direction; and the swing angle of the hull.

The shipboard information processing apparatus 10 collects data for these influencing factors and stores the data in the shipboard storage unit 29 in a chronological order. The model generation unit 27 generates a ship motion model M by using the influencing factors stored in the shipboard storage unit 29. The ship motion model M may be generated by applying an influence parameter obtained from the influencing factor data to a mathematical formula representing a physical model of ship motion so as to obtain a coefficient for each influence term, or by generating a mathematical formula representing a physical model of ship motion by machine learning from the influencing factor data.

The ship motion model M is generated by using information at the time of design and test results from land and sea tests. Since the ship motion of the ship 1 changes depending on moment-to-moment change factors such as the amount of cargo, foulness of the propeller of the ship 1, and hull posture (e.g., trim of the ship 1), however, the ship motion model M is updated as needed by the model generation unit 27 in the embodiment.

Since the ship motion model M changes according to the maneuvering command N, it is desirable that the ship motion model M be updated according to the change in the maneuvering command N. Therefore, the model generation unit 27 updates the ship motion model M by using the ship maneuvering command N. When the ship motion model M is updated, the second state prediction unit 55 predicts the second motion state Q by using the updated ship motion model M.

Further, the ship motion model M may incorporate a propulsion machine model that represents the rotational speed response of the propulsion machine 74. Further, when the propeller is a controllable pitch propeller (CPP), a CPP model may be built into the ship motion model M. Further, when the propulsion means of the ship 1 is, instead of a propulsion machine, an electric propulsion machine driven by an electric motor (not shown) or a hybrid propulsion machine comprised of a combination of a propulsion machine and an electric propulsion machine, the ship motion model M may incorporate a model of each propulsion machine. An example of the ship motion model M will be described below.

The ship motion model M generated by the model generation unit 27 is transmitted to the support information processing apparatus 50 as needed and is shared between the ship side and the land side. When the ship motion model M is updated, the shipboard information processing apparatus 10 transmits the updated ship motion model M to the support information processing apparatus 50.

The time lag identification unit 53 identifies the time difference from the transmission of the ship motion information J by the shipboard information processing apparatus 10 to the reception of the ship motion information J by the support information processing apparatus 50 as the reception time lag Δt2. The time lag identification unit 53 in this example identifies the time from the transmission of the ship motion information J from the shipboard communication unit 28 to the reception of the ship motion information J by the support side communication unit 52 as the reception time lag Δt2.

Specifically, the time lag identification unit 53 identifies the reception time lag Δt2 by using the standard time (hereinafter referred to as "ship side standard time Tb") in the ship 1 identified when the ship motion information J is transmitted from the shipboard information processing apparatus 10 and using the standard time (hereinafter referred to as "support side standard time Ta") in the support information processing apparatus 50 identified when the ship motion information J is received. For example, the reception time lag Δt2 can be identified by adding, on the ship side, the ship side standard time Tb at the time of transmission to the ship-shore transmission data, reading, on the land side, the transmission time from the ship-shore transmission data, and determining the time difference between the ship side standard time Tb thus read and the support side standard time Ta at the time of reception.

Here, it is desirable for the ship side and the land side to use a common standard time. In the embodiment, therefore, the shipboard information processing apparatus 10 has the standard time detection unit 26 and the support information processing apparatus 50 has the standard time detection unit 51 in order to acquire the standard time. The standard time detection unit 26 and the standard time detection unit 51 acquire a standard time by using satellite radio waves received by a GPS receiver that is a type of GNSS (Global Navigation Satellite System). In another example, high-precision clocks that are synchronized with each other may be provided on the ship side and the land side in order to obtain a standard time, and the clock time may be used accordingly.

The transmission time lag $\Delta t1$ can then be identified by transmitting, for example, shore-ship transmission data to which the support side standard time Ta is added on the land side, reading the support side standard time Ta from the shore-ship transmission data on the ship side, and determining the time difference between the support side standard time Ta and the ship side standard time Tb. In this method, however, there is a problem in that the land side can use the transmission time lag $\Delta t1$ only at a point of time further delayed, by the reception time lag, from when the transmission time lag $\Delta t1$ is identified.

In the embodiment, therefore, data obtained by adding the first support side standard time Ta1 is transmitted to the ship side by shore-ship transmission, and data obtained by adding the ship side standard time Tb to the data is transmitted to the land side by ship-shore transmission. The time lag identification unit 53 identifies the total time lag (hereinafter referred to as "reciprocal time lag $\Delta t3$") incurred in shore-ship transmission and ship-shore transmission from the time difference between the second support side standard time Ta2 and the first support side standard time Ta1 identified when the data is received.

Further, the time lag identification unit 53 identifies the reception time lag $\Delta t2$ from the time difference between the ship side standard time Tb and the second support side standard time Ta2, and identifies the transmission time lag $\Delta t1$ from the time difference between the reciprocal time lag $\Delta t3$ and the reception time lag $\Delta t2$.

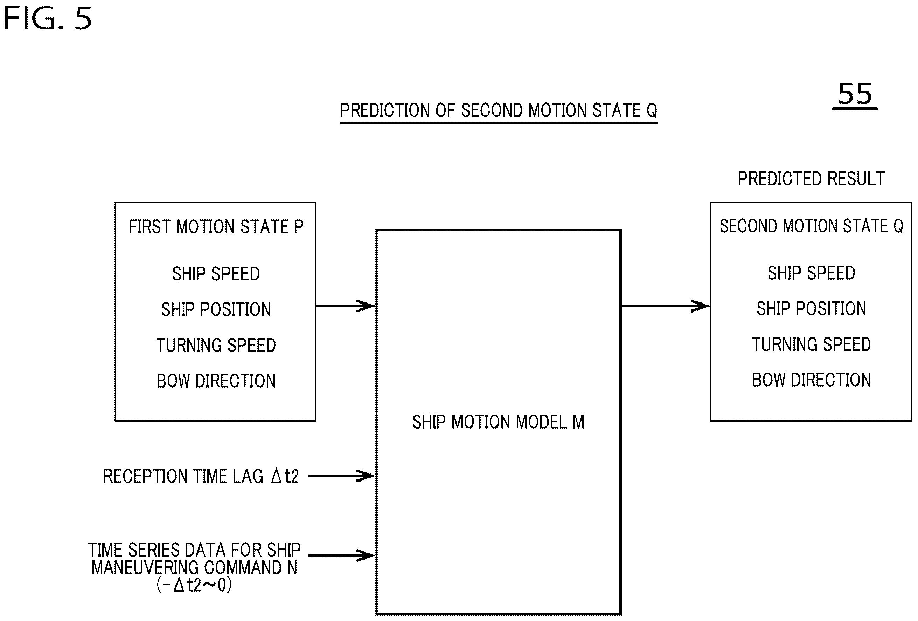

Referring to Figs. 4 and 5, the ship motion model M will be described. Fig. 5 is an explanatory diagram schematically showing the operation of the second state prediction unit 55. The support information processing apparatus 50 includes a ship maneuvering command storage unit 59 that stores the ship maneuvering command N from a past point of time to the present time in a chronological order, and the second state prediction unit 55 that predicts the second motion state Q from the first motion state P by using the ship motion model M. The ship maneuvering command storage unit 59 stores time series data for the ship maneuvering command N in a range L (see Fig. 4) from the past, defined by the reciprocal time lag $\Delta t3$ (=$\Delta t1$+$\Delta t2$), to the present point of time K.

As shown in Fig. 5, the second state prediction unit 55 predicts the second motion state Q at the current point of time K when the reception time lag $\Delta t2$ elapses since the first motion state P, by inputting, to the ship motion model M, the first motion state P, the reception time lag $\Delta t2$, and time-series data for the ship maneuvering command N in a storage range (-$\Delta t2$ to 0) within the storage range L.

An example of the ship motion model M will be described. The ship motion model M is represented by a matrix f composed of a plurality of polynomials representing changes in the state of the ship 1. The model generation unit 27 generates a model matrix expression f indicating the state change of the ship 1. The state of the ship 1 includes, for example, the ship speed, ship position, turning speed, and bow orientation.

Referring to expression 1 to expression 5, a polynomial related to ship speed, which is among the information that defines the state of the ship 1, will be described. A) The change in ship speed Vs (dVs/dt) is, most simply put, generated by the difference between the thrust Tp generated by a propeller 75 and the hull resistance R and so is given by expression 1.

$$dVs/dt=f1(Tp,R)...(expression\ 1)$$

B) Since the thrust Tp is represented by the propeller rotational speed Np, the slip rate Sp of the propeller 75, etc. and so is given by expression 2.

$$Tp=f2(Np,Sp)...(expression\ 2)$$

C) Further, since the change in the propeller rotational speed Np is generated by the difference between the drive torque Qp of the propeller 75 and the drive torque Qe from the propulsion machine 74, Tp is given by expression 3.

$$Tp=f2(f3(Qp,\ Qe),Sp)...(expression\ 3)$$

D) Since the propulsion machine 74 torque Qe is determined by the deviation between the current propulsion machine rotational speed Ne and the command rotational speed Ne_t, Tp is given by expression 4.

$$Tp=f2(f3(Qp,f4(Ne,Ne\_t)),Sp)...(expression\ 4)$$

E) Based on the foregoing, the change in ship speed Vs (dVs/dt) is given by the polynomial of expression 5.

$$dVs/dt = f(Qp, Ne, Ne\_t, Sp, R)...(expression\ 5)$$

Similarly, of the state of the ship 1, changes in "ship position, turning speed, and bow orientation" other than ship speed can also be represented by polynomials so that the ship motion model M is represented by a matrix f based on these polynomials.

The second motion state Q can be estimated by correcting the first motion state P by using the result of integrating the matrix f from $\Delta t2$ to 0 (=the present point of time K) as a correction amount.

The ship motion model M generated by the model generation unit 27 on the ship side is transmitted to the support information processing apparatus 50 and can be used to calculate a predicted value of the state of the ship 1. The command rotation speed Ne_t, which is one of the ship maneuvering commands N, is, for example, stored in the ship maneuvering command storage unit 59 of the support information processing apparatus 50 and can be used to make the predictive calculation retroactively from the present point of time K. The same applies to the command steering angle Ae_t for the turning speed.

In addition, information other than the maneuvering command N such as environmental conditions surrounding the ship can be calculated by using values predicted from past data. The predicted value may be an average value of past data over a predetermined period.

The second motion state Q predicted by the second state prediction unit 55 is displayed on the information display unit 58, and the onshore ship maneuvering operator can maneuver the ship as if viewing the ship at the current point of time, by maneuvering the ship based on the display.

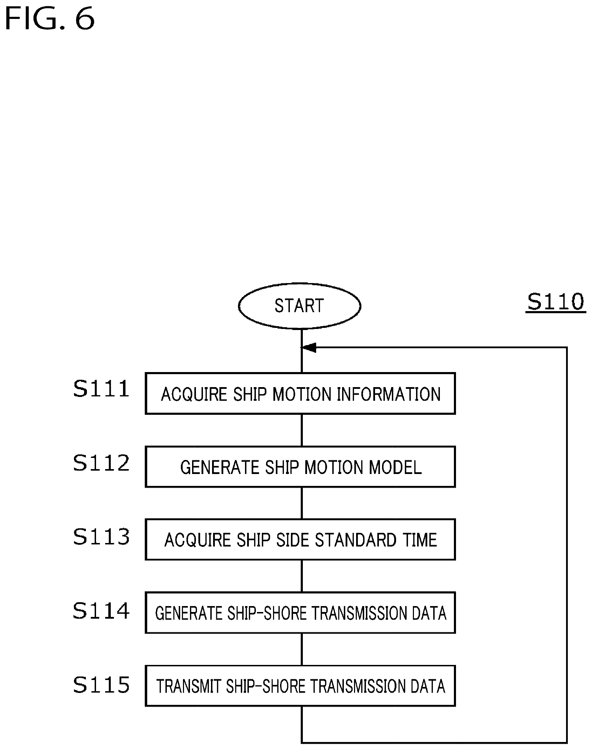

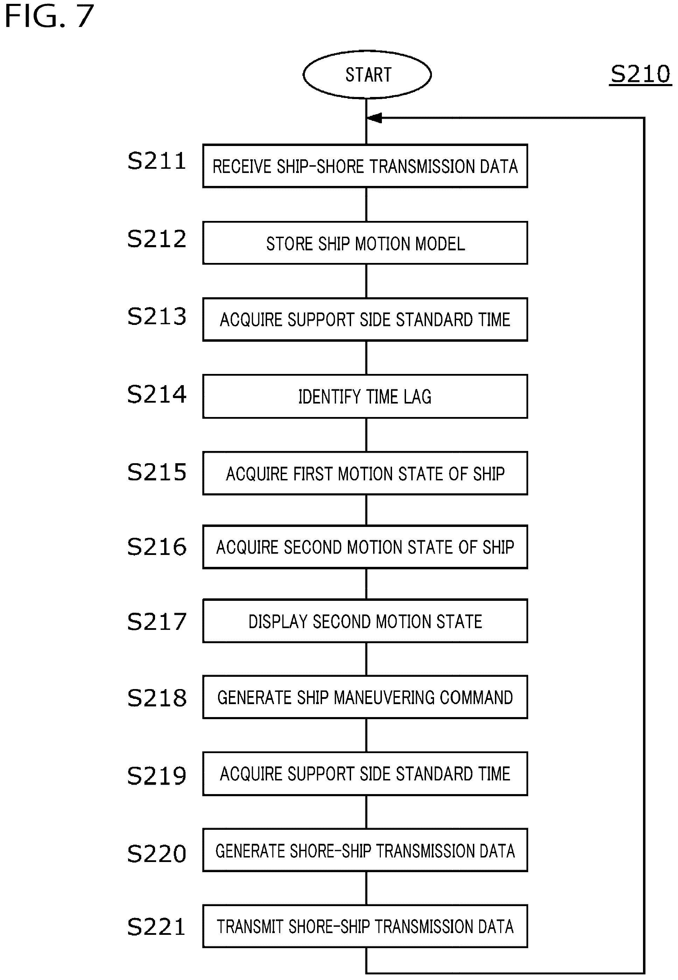

An example of the operation of the ship monitoring system 100 will be described with reference to Figs. 6 and 7. The operation of the ship monitoring system 100 is a coordinated operation of the operation S110 of the shipboard information processing apparatus 10 and the operation S210 of the support information processing apparatus 50. Fig. 6 is a flowchart showing the operation S110 of the shipboard information processing apparatus 10. Fig. 7 is a flowchart showing the operation S210 of the support information processing apparatus 50.

The operation S110 of the shipboard information processing apparatus 10 will be described. When the operation S110 is started, the shipboard information processing apparatus 10 acquires the ship motion information J (step S111).

Next, the shipboard information processing apparatus 10 generates a ship motion model M (step S112). In this step, the model generation unit 27 generates the ship motion model M by using collected influencing factor data.

Next, the shipboard information processing apparatus 10 acquires the ship side standard time Tb (step S113). In this step, the standard time detection unit 26 acquires the standard time by using satellite radio waves received by a GPS receiver. Next, the shipboard information processing apparatus 10 generates ship-shore transmission data (step S114). The ship-shore transmission data includes ship-related information including the ship motion information J, ship motion model M, and ship side standard time Tb.

Next, the shipboard information processing apparatus 10 transmits the ship-shore transmission data (step S115). In this step, the shipboard communication unit 28 transmits the generated ship-shore transmission data to the support information processing apparatus 50 by ship-shore transmission. After executing step S115, the process returns to step S111 and repeats steps S111 to S115.

The operation S210 of the support information processing apparatus 50 will be described. When the operation S210 is started, the support information processing apparatus 50 receives the ship-shore transmission data (step S211). In this process, the support side communication unit 52 receives the ship-shore transmission data transmitted by ship-shore transmission. Next, the support information processing apparatus 50 isolates the ship motion model M from the ship-ashore transmission data, and the storage unit 64 stores the isolated ship motion model M (step S212).

Next, the support information processing apparatus 50 acquires the support side standard time Ta (step S213). In this step, the standard time detection unit 51 acquires the support side standard time Ta by using satellite radio waves received by a GPS receiver. The support side standard time Ta in this step is retained as the second support side standard time Ta2.

Next, the support information processing apparatus 50 identifies a time lag (step S214). In this step, the time lag identification unit 53 identifies the reception time lag $\Delta t2$ from the time difference between the ship side standard time Tb and the second support side standard time Ta2. Next, the support information processing apparatus 50 acquires the first motion state of the ship (step S215). In this step, the first motion state acquisition unit 56 acquires and retains the past state of the ship 1 indicated by the received ship motion information J as the first motion state P.

Next, the support information processing apparatus 50 predicts the second motion state of the ship 1 (step S216). In this step, the second state prediction unit 55 inputs the first motion state P, the received time lag $\Delta t2$, and the time series data for the ship maneuvering command N to the ship motion model M. Next, the support information processing apparatus 50 displays the second motion state (step S217). In this step, the support information processing apparatus 50 displays the second motion state Q on the information display unit 58. The information display unit 58 may display the first motion state P at the same time as the second motion state Q.

Next, the support information processing apparatus 50 generates a ship maneuvering command (step S218). In this step, the ship maneuvering command generation unit 61 generates a ship maneuvering command N based on a ship maneuvering operation of the ship maneuvering operator on the land side. The ship maneuvering command storage unit 63 stores the ship maneuvering command N in a chronological order. Next, the support information processing apparatus 50 acquires the support side standard time Ta (step S219). The support side standard time Ta in this step is retained as the first support side standard time Ta1.

Next, the support information processing apparatus 50 generates shore-ship transmission data (step S220). In this step, the transmission data generation unit 62 generates shore-ship transmission data including the ship maneuvering command N, standard time, and other data. Next, the support information processing apparatus 50 transmits the shore-ship transmission data (step S221). In this step, the support side communication unit 52 transmits the generated shore-ship transmission data to the shipboard information processing apparatus 10 by shore-ship transmission. After executing step S221, the process returns to step S211 and repeats steps S211 to S221.

Each of the above steps is illustrative and can be modified. Give above is a description of the first embodiment.

Hereinafter, the second and third embodiments of the present invention will be described. In the drawings and descriptions of the second and third embodiments, the same or equivalent constituting elements and members as those in the first embodiment are denoted by the same reference numerals. Duplication of the description of the first embodiment will be omitted as appropriate, and the configuration different from the first embodiment will be focused.

[Second embodiment]

The second embodiment of the present invention relates to a control method for the ship monitoring system 100. The method relates to a ship monitoring system 100 including: a shipboard information processing apparatus 10 provided on a ship 1 and including a shipboard communication unit 28 and an information acquisition unit 21 that acquires ship motion information J related to a ship motion of the ship 1; and a support information processing apparatus 50 provided outside the ship 1 and including: a support side communication unit 52 capable of communicating with the shipboard communication unit 28; a time lag identification unit 53; and a state prediction unit 55, the method including: identifying a time from transmission of the ship motion information J from the shipboard communication unit 28 to reception of the ship motion information J by the support side communication unit 52 as a reception time lag $\Delta t2$ (S214); and inputting the ship motion information J and the reception time lag $\Delta t2$ to a ship motion model M related to the ship motion of the ship 1 to predict a second motion state of the ship 1 ahead of a first motion state of the ship 1 indicated by the ship motion information J by a period of time based on the reception time lag $\Delta t2$ (S216).

The second embodiment provides the same advantage and benefit as the first embodiment.

[Third embodiment]

The third embodiment of the present invention relates to a recording medium that stores a control program P100 (computer program) of the ship monitoring system 100. The program P100 relates to a ship monitoring system 100 including: a shipboard information processing apparatus 10 provided on a ship 1 and including a shipboard communication unit 28 and an information acquisition unit 21 that acquires ship motion information J related to a ship motion of the ship 1; and a support information processing apparatus 50 provided outside the ship 1 and including: a support side communication unit 52 capable of communicating with the shipboard communication unit 28; a time lag identification unit 53; and a state prediction unit 55, the program including computer-implemented modules including: a module that identifies a time from transmission of the ship motion information J from the shipboard communication unit 28 to reception of the ship motion information J by the support side communication unit 52 as a reception time lag $\Delta t2$ (S214); and a module that inputs the ship motion information J and the reception time lag $\Delta t2$ to a ship motion model M related to the ship motion of the ship 1 to predict a second motion state of the ship 1 ahead of a first motion state of the ship 1 indicated by the ship motion information J by a period of time based on the reception time lag $\Delta t2$ (S216).

These functions of the program P100 may be installed in the storage (eg, the storage unit 64) of the support information processing apparatus 50 as an application program in which a plurality of modules corresponding to the function blocks of the support information processing apparatus 50 are implemented. The program P100 may be read into the main memory of the processor (eg, CPU) of the computer incorporated in the support information processing apparatus 50 and executed.

The third embodiment provides the same advantage and benefit as the first embodiment.

The embodiments of the present invention have been described above in detail. The embodiments described above are merely specific examples of practicing the present invention. The details of the embodiments shall not be construed as limiting the technical scope of the present invention. A number of design modifications such as modification, addition, deletion, etc. of constituting elements may be made to the extent that they do not depart from the idea of the invention defined by the claims. Although the details subject to such design modification are indicated in the embodiments described above by using phrases such as "of this embodiment" and "in this embodiment", details not referred to as such are also subject to design modification.

[Variations]

Variations will be described below. Identical or like constituting elements and members shown in the drawings and description of the variation are represented by identical symbols. Duplication of the description of the embodiments will be omitted as appropriate, and the configuration different from the embodiments will be focused.

[Variation 1]

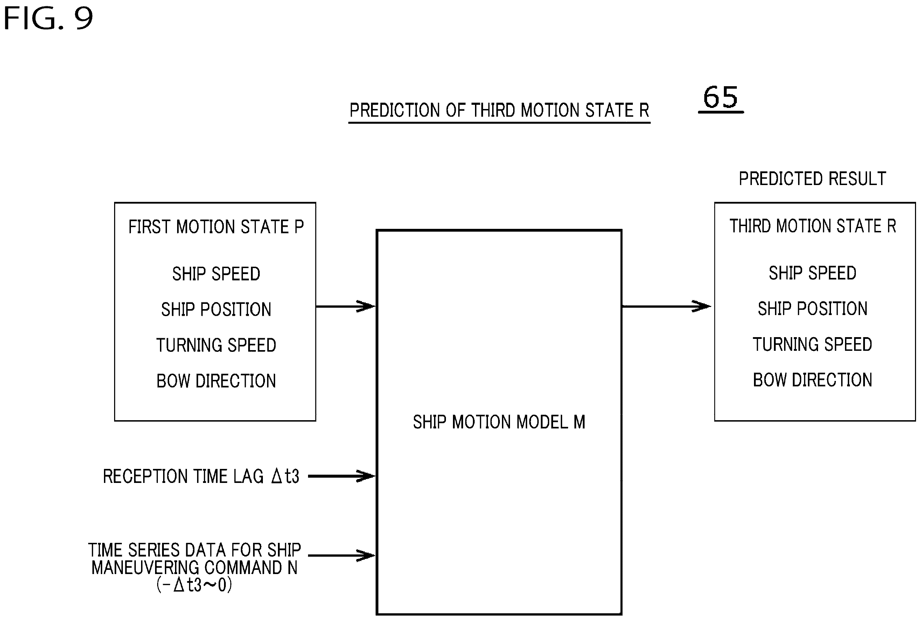

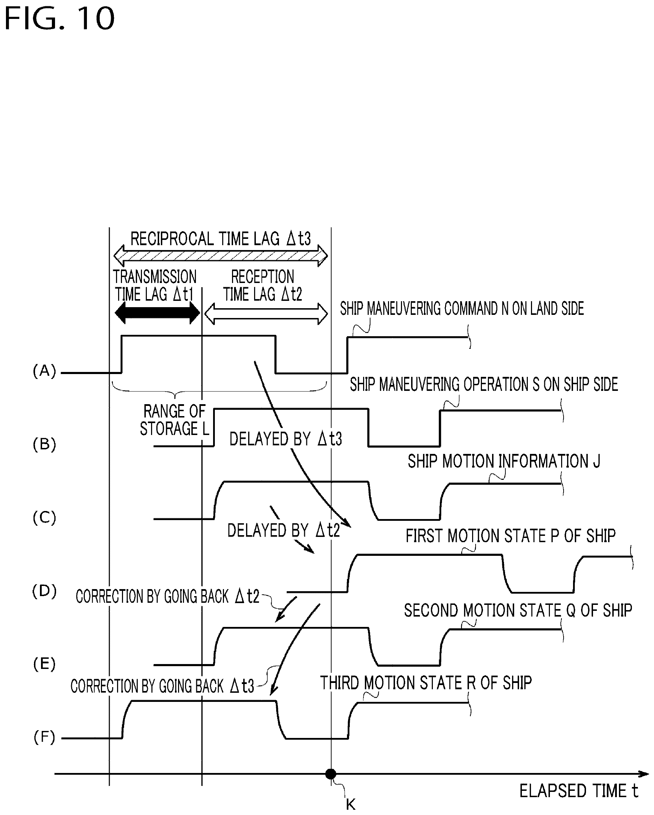

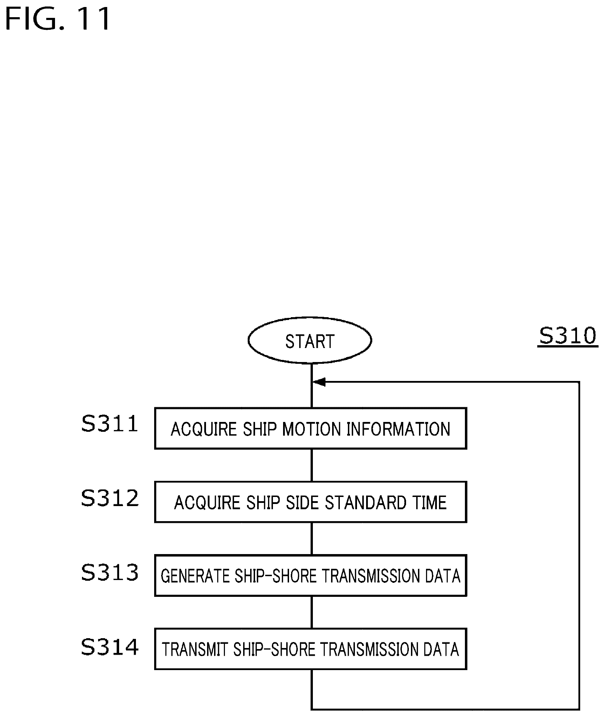

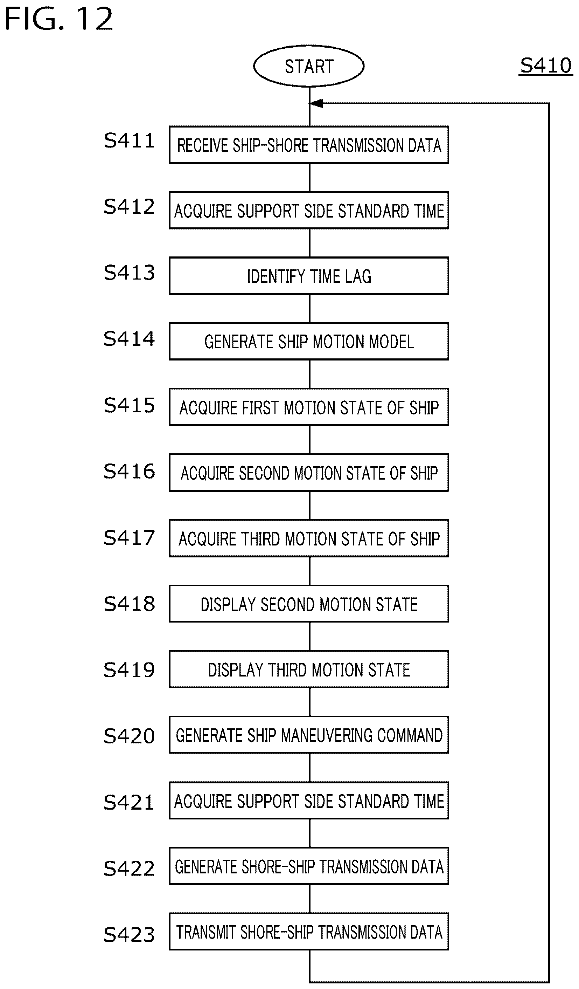

Hereinafter, the ship monitoring system 100 according to the first variation of the present invention will be described with reference to Figs. 8 to 12. Fig. 8 is a block diagram schematically showing the ship monitoring system 100 of the first variation. Fig. 9 is an explanatory diagram schematically showing the operation of a third state prediction unit 65. Fig. 10 is a timing chart showing an example of the operation of the ship monitoring system 100 of the first variation for predicting the third motion state. Fig. 11 is a flowchart showing an example of the operation of the shipboard information processing apparatus 10 of the first variation. Fig. 12 is a flowchart showing an example of the operation of the support information processing apparatus 50 of the first variation. Fig. 8, Fig. 9, Fig. 10, Fig. 11, and Fig. 12 correspond to Fig. 2, Fig. 4, Fig. 5, Fig. 6, and Fig. 7, respectively. The descriptions provided for Fig. 2, Fig. 4, Fig. 5, Fig. 6, and Fig. 7 apply to Fig. 8, Fig. 9, Fig. 10, Fig. 11, and Fig. 12 to the extent that the descriptions are not contradictory."

An explanation will be given of the first difference. In the description of the embodiments, an example of generating a ship motion model M in the shipboard information processing apparatus 10 is shown, but this need not be the case. The ship motion model M may be generated outside the ship 1. In the first variation, as shown in Fig. 8, the support information processing apparatus 50 on the land side has a model generation unit 66, and the shipboard information processing apparatus 10 does not have a model generation unit 27. In the variation, therefore, the ship motion model M is generated by the model generation unit 66 and stored in the storage unit 64.

The model generation unit 66 can acquire the influencing factor data used to generate the ship motion model M from the shipboard information processing apparatus 10 by ship-shore transmission, thereby generating the ship motion model M by using the acquired influencing factor data. Further, the model generation unit 66 can update the ship motion model M by using the newly acquired data. By generating and updating the ship motion model M in the support information processing apparatus 50, the computing power provided in the shipboard information processing apparatus 10 can be smaller so that the cost of the shipboard information processing apparatus 10 can be reduced.

An explanation will be given of the second difference. In the description of the embodiment, an example is shown in which the support information processing apparatus 50 displays the second motion state Q predicted by using the reception time lag $\Delta t2$, but this need not be the case. In the variation, the third state prediction unit 65 is provided. The third state prediction unit 65 uses the transmission time lag $\Delta t1$ to predict a future state of the ship 1 (hereinafter referred to as "third motion state R") ahead of the first motion state P by a total time (reciprocal trip time lag $\Delta t3$) derived from adding up the reception time lag $\Delta t2$ and the transmission time lag $\Delta t1$.

The time lag identification unit 53 of the first variation identifies the time from the transmission of the ship maneuvering command N from the support side communication unit 52 to the execution of control by the engine control unit 17 based on the ship maneuvering command N received by the support side communication unit 52 as the transmission time lag $\Delta t1$. The third state prediction unit 65 uses the ship motion information J, the transmission time lag $\Delta t1$, and the ship motion model M to predict the third motion state R of the ship 1 ahead of the first motion state P by a period of time derived from adding up the received time lag $\Delta t2$ and the transmission time lag $\Delta t1$.

When predetermined information is transmitted from the support information processing apparatus 50 to the shipboard information processing apparatus 10 and returned from the shipboard information processing apparatus 10 to the support information processing apparatus 50, the time lag identification unit 53 identifies the transmission time lag $\Delta t1$ by using the result of subtracting the reception time lag $\Delta t2$ from the time difference between the point of time when the predetermined information is transmitted from the support information processing apparatus 50 and the point of time when the predetermined information is received by the support information processing apparatus 50.

In another example, the time lag identification unit 53 may use the time difference between the point of time in the support information processing apparatus 50 when the predetermined information is transmitted from the support information processing apparatus 50 and the time in the shipboard information processing apparatus 10 when the predetermined information is received.

In the example of Fig. 10, the time lag identification unit 53 identifies the reciprocal time lag $\Delta t3$ from the time difference identified between the second support side standard time Ta2 and the first support side standard time Ta1 when the information is received. The second state prediction unit 55 predicts the second motion state Q shown in Fig. 10E by using the first motion state P shown in Fig. 10D and the reception time lag $\Delta t2$. Further, the third state prediction unit 65 predicts the third motion state R shown in Fig. 10F by using the first motion state P shown in Fig. 10D and the reciprocal time lag $\Delta t3$. The third motion state R may be predicted by using the second motion state Q shown in Fig. 10E and the transmission time lag $\Delta t1$.

Further, the "future" of the third motion state R means the future as seen from the time of ship maneuvering (=present point of time K) and is a state determined by predicting the point of time of reception on the ship side as being delayed by the transmission time lag $\Delta t1$. That is, the support information processing apparatus 50 can display, on the information display unit 58, the third motion state R occurring when the ship maneuvering command N reaches the ship side. The ship maneuvering operator can maneuver the ship, foreseeing the point of time when the maneuvering command N is received on the ship side.

As shown in Fig. 9, the third state prediction unit 65 predicts the third motion state R occurring when the reciprocal time lag $\Delta t3$ elapses since the first motion state P, by inputting, to the ship motion model M, the first motion state P, the reciprocal time lag $\Delta t3$, and time-series data for the ship maneuvering command N in a storage range (-$\Delta t3$ to 0).

The operation S310 of the shipboard information processing apparatus 10 shown in Fig. 11 corresponds to the operation S110 of Fig. 6. Steps S311, S312, S313, and S314 of the operation S310 correspond to steps S111, S113, S114, and S115 of the operation S110, respectively. The operation S310 differs from the operation S110 in that it does not have a step of generating a ship motion model M. The description given for the operation S110 applies to the operation S310 to the extent that the descriptions are not contradictory.

The operation S410 of the support information processing apparatus 50 shown in Fig. 12 corresponds to the operation S210 of Fig. 7. Steps S411, S412, S413, S415, S416, S418, S420, S421, S422, S423 of the operation S210 correspond to steps S211, S213, S214, S215, S216, S217, S218, S219, S220, S221 of the operation S210, respectively. The operation S410 differs from the operation S210 in that it has steps S414, S417, and S419. The description given for the operation S210 applies to operation S410 to the extent that the descriptions are not contradictory.

The support information processing apparatus 50 generates a ship motion model M in step S414. In this step, the model generation unit 66 generates a ship motion model M by using the collected influencing factor data. The storage unit 64 stores the generated ship motion model M.

The support information processing apparatus 50 predicts the third motion state of the ship in step S417. In this step, the third state prediction unit 65 predicts the third motion state R by inputting the first motion state P, the reciprocal time lag $\Delta t3$, and time series data for the ship maneuvering command N to the ship motion model M.

The support information processing apparatus 50 displays the third motion state in step S419. In this step, the support information processing apparatus 50 displays the third motion state R on the information display unit 58. The information display unit 58 may display the second motion state Q and the first motion state P simultaneously with the third motion state R.

[Other variations]

In the description of the embodiments, an example is shown in which the support information processing apparatus 50 includes the ship maneuvering command generation unit 61, and the ship maneuvering command storage unit 63, and the support information processing apparatus 50 transmits data including the ship maneuvering command N to the shipboard information processing apparatus 10. However, the invention is not limited to this example. For example, the support information processing apparatus may not include a ship maneuvering command generation unit and a ship maneuvering command storage unit, and the support information processing apparatus may not transmit ship maneuvering commands.

In the description of the embodiments, an example is shown in which the first motion state P and the second motion state Q of the ship 1 are displayed on the information display unit 58. However, the invention is not limited to this example. For example, the display on the information display unit 58 may be manually switched such that the first motion state is displayed and the second motion state Q is not displayed, or the second motion state Q is displayed and the first motion state is not displayed, or both of the states are displayed. Further, for example, when the predicted second motion state Q has a large deviation from the actual ship state that occurs after the reception time lag $\Delta t2$, an alert may be displayed on the information display unit 58, or the display may be automatically switched to display the first movement state Q and not display the second motion state Q.

Further, for example, the transmission time lag $\Delta t1$ and the reception time lag $\Delta t2$ may be compared in a timely manner. When the difference becomes larger than a referential difference, an alert may be displayed on the information display unit 58 because a certain communication trouble may be occurring. Further, for example, an alert may be displayed on the information display unit 58 equally when the time lag is too long or when it can be determined that communication is interrupted.

In the description of the embodiments, an example is shown in which the difference between the reciprocal time lag Δt3 and the reception time lag Δt2 is defined as the transmission time lag Δt1. However, the invention is not limited to this example. The transmission time lag Δt1 may be measured directly on the ship side.

In the description of the embodiments, an example is shown in which the second motion state Q of the ship 1 is predicted by the support information processing apparatus 50 on the land side. However, the invention is not limited to this example. The second motion state Q may be predicted by the shipboard information processing apparatus on the ship side. In this case, the shipboard information processing apparatus can predict the second motion state Q by estimating a future maneuvering command N ahead of the current ship maneuvering command N by the reception time lag. Therefore, the shipboard information processing apparatus has a function of predicting a future ship maneuvering command N by using the pattern of the past ship maneuvering commands N. For example, the shipboard information processing apparatus can predict a future ship maneuvering command N by extrapolation estimation that makes, based on time series data for the most recent ship maneuvering commands N up to the present, an estimation outside the range of the time series data. Further, for example, a future ship maneuvering command N can be predicted by classifying and storing a pattern of past ship maneuvering commands N, comparing the stored pattern with the pattern of the most recent ship maneuvering commands N up to the present, and applying the pattern to the pattern of the past ship maneuvering commands N.

In the description of the embodiments, an example is shown in which the propulsion machine 74 rotates the propeller 75 to obtain a propulsion force. However, the invention is not limited to this example. The mechanism for obtaining a propulsion force may merely need to propel the ship. For example, a gas or the like may be discharged based on the rotational output of the propulsion machine 74 to obtain a propulsion force from the reactive force of the gas or the like.

In the description of the embodiments, an example is shown in which the propulsion machine 74 is a diesel engine. However, the invention is not limited to this example. For example, the propulsion machine may be an internal combustion engine other than a diesel engine, or an external combustion engine.

The variations described above provide the same advantage and benefit as the embodiments.

Any combination of the embodiment and the variation described above will also be useful as an embodiment of the present invention. New embodiments created by the combination provide the advantages of the embodiment and the variation combined.

## Claims

**1.** A ship monitoring system (100) comprising:

a shipboard information processing apparatus (10) provided on a ship (1) and including a shipboard communication unit (28) and an information acquisition unit (21) that acquires ship motion information related to a ship motion of the ship (1); and
a support information processing apparatus (50) provided outside the ship (1) and including: a support side communication unit (52) capable of communicating with the shipboard communication unit (28); a time lag identification unit (53); and a state prediction unit (55);
wherein the time lag identification unit (53) is adapted to identify a time from transmission of the ship motion information from the shipboard communication unit (28) to reception of the ship motion information by the support side communication unit (52) as a reception time lag, and
wherein the state prediction unit (55) is adapted to input the ship motion information and the reception time lag to a ship motion model related to the ship motion of the ship (1) to predict a second motion state of the ship (1) ahead of a first motion state of the ship (1) indicated by the ship motion information by a period of time based on the reception time lag;
**characterized in that**
the shipboard information processing apparatus (10) includes an engine control unit (17) adapted to control a propulsion machine (74) or a rudder machine (76) provided in the ship (1), based on a ship maneuvering command received via the shipboard communication unit (28);
wherein the support information processing apparatus (50) is adapted to transmit the ship maneuvering command to the shipboard communication unit (28) via the support side communication unit (52);
wherein the time lag identification unit (53) is adapted to identify a time from transmission of the ship maneuvering command from the support side communication unit (52) to reception of the ship maneuvering command by the shipboard communication unit (28) as a transmission time lag;
wherein the state prediction unit (55) is adapted to use the transmission time lag to predict a third motion state of the ship ahead of the first motion state by a total time derived from adding up the reception time lag and the transmission time lag; and

wherein the support information processing apparatus (50) includes an information display unit (58) adapted to display the third motion state.

2. The ship monitoring system (100) according to claim 1,
wherein the time lag identification unit (53) is adapted to identify a time from the transmission of the ship maneuvering command from the support side communication unit (52) to execution of control by the engine control unit (17) based on the ship maneuvering command received by the support side communication unit (52) as the transmission time lag.

3. The ship monitoring system (100) according to claim 1 or claim 2,
wherein the information display unit (58) is adapted to display the second motion state.

4. The ship monitoring system (100) according to any of claims 1 to 3,
wherein the state prediction unit (55) is adapted to predict, when the ship motion model is updated, the second motion state by using the updated ship motion model.

5. The ship monitoring system (100) according to any of claims 1 to 4,
wherein the ship motion model is updated by using the ship maneuvering command.

6. A control method for a ship monitoring system (100), the method relating to a ship monitoring system (100) including: a shipboard information processing apparatus (10) provided on a ship (1) and including: a shipboard communication unit (28) and an information acquisition unit (21) for acquiring ship motion information related to a ship motion of the ship (1); and a support information processing apparatus (50) provided outside the ship (1) and including: a support side communication unit (52) capable of communicating with the shipboard communication unit (28), a time lag identification unit (53), a state prediction unit (55), and an information display unit (58); wherein
the method includes:

identifying (S214;S413) a time from transmission of the ship motion information from the shipboard communication unit (28) to reception of the ship motion information by the support side communication unit (52) as a reception time lag; and
inputting (S216;S416) the ship motion information and the reception time lag to a ship motion model related to the ship motion of the ship (1) to predict a second motion state of the ship (1) ahead of a first motion state of the ship (1) indicated by the ship motion information by a period of time based on the reception time lag;
**characterized in that** the method further includes:

generating (S218;S420) a ship maneuvering command;
transmitting (S221;S423) the ship maneuvering command to the shipboard communication unit (28) via the support side communication unit (52);
identifying a time from transmission of the ship maneuvering command from the support side communication unit (52) to reception of the ship maneuvering command by the shipboard communication unit (28) as a transmission time lag;
using (S417) the transmission time lag to predict a third motion state of the ship ahead of the first motion state by a total time derived from adding up the reception time lag and the transmission time lag; and
displaying (S419) the third motion state.

7. A control program of a ship monitoring system (100), the program relating to a ship monitoring system (100) including: a shipboard information processing apparatus (10) provided on a ship (1) and including a shipboard communication unit (28) and an information acquisition unit (21) for acquiring ship motion information related to a ship motion of the ship (1); and a support information processing apparatus (50) provided outside the ship (1) and including: a support side communication unit (52) capable of communicating with the shipboard communication unit (28), a time lag identification unit (53), a state prediction unit (55), and an information display unit (58); wherein
the program includes computer-implemented modules including:

a module adapted to identify a time from transmission of the ship motion information from the shipboard communication unit (28) to reception of the ship motion information by the support side communication unit (52) as a reception time lag;
a module adapted to input the ship motion information and the reception time lag to a ship motion model related to the ship motion of the ship (1) to predict a second motion state of the ship (1) ahead of a first motion state of the ship (1) indicated by the ship motion information by a period of time based on the reception time;

**characterized in that** the computer-implemented modules further include:

a module adapted to generate a ship maneuvering command;
a module adapted to transmit the ship maneuvering command to the shipboard communication unit (28) via the support side communication unit (52);
a module adapted to identify a time from transmission of the ship maneuvering command from the support side communication unit (52) to reception of the ship maneuvering command by the shipboard communication unit (28) as a transmission time lag;
a module adapted to use the transmission time lag to predict a third motion state of the ship ahead of the first motion state by a total time derived from adding up the reception time lag and the transmission time lag; and
a module to display the third motion state.

**Patentansprüche**

1. Ein Schiffsüberwachungssystem (100), das aufweist:

eine Vorrichtung (10) zur Verarbeitung von Schiffsinformationen, die auf einem Schiff (1) vorgesehen ist und eine Schiffskommunikationseinheit (28) und eine Informationserfassungseinheit (21) aufweist, die Schiffsbewegungsinformationen in Bezug auf eine Schiffsbewegung des Schiffes (1) erfasst; und
eine Support-Informationsverarbeitungsvorrichtung (50), die außerhalb des Schiffes (1) vorgesehen ist und Folgendes aufweist: eine Support-seitige Kommunikationseinheit (52), die mit der Schiffskommunikationseinheit (28) kommunizieren kann; eine Zeitverzögerungsidentifikationseinheit (53); und eine Zustandsvorhersageeinheit (55);
wobei die Zeitverzögerungsidentifikationseinheit (53) dazu ausgelegt ist, eine Zeit von der Übertragung der Schiffsbewegungsinformationen von der Schiffskommunikationseinheit (28) bis zum Empfang der Schiffsbewegungsinformationen durch die Support-seitige Kommunikationseinheit (52) als eine Empfangszeitverzögerung zu identifizieren, und
wobei die Zustandsvorhersageeinheit (55) dazu ausgelegt ist, die Schiffsbewegungsinformationen und die Empfangszeitverzögerung in ein Schiffsbewegungsmodell einzugeben, das sich auf die Schiffsbewegung des Schiffes (1) bezieht, um einen zweiten Bewegungszustand des Schiffes (1) vorherzusagen, der einem ersten Bewegungszustand des Schiffes (1), der durch die Schiffsbewegungsinformationen angezeigt wird, um eine Zeitspanne basierend auf der Empfangszeitverzögerung vorausgeht;
**dadurch gekennzeichnet, dass**
die Vorrichtung (10) zur Verarbeitung von Schiffsinformationen eine Maschinensteuereinheit (17) aufweist, die geeignet ist, eine Antriebsmaschine (74) oder eine Rudermaschine (76), die in dem Schiff (1) vorgesehen sind, auf der Grundlage eines über die Schiffskommunikationseinheit (28) empfangenen Schiffsmanövrierbefehls zu steuern;
wobei die Vorrichtung (50) zur Verarbeitung von Unterstützungsinformationen so ausgelegt ist, dass sie den Schiffsmanöverbefehl über die Support-seitige Kommunikationseinheit (52) an die Schiffskommunikationseinheit (28) übermittelt;
wobei die Zeitverzögerungsidentifikationseinheit (53) dazu ausgelegt ist, eine Zeit von der Übertragung des Schiffsmanöverbefehls von der Support-seitigen Kommunikationseinheit (52) bis zum Empfang des Schiffsmanöverbefehls durch die Schiffskommunikationseinheit (28) als eine Übertragungszeitverzögerung zu identifizieren;
wobei die Zustandsvorhersageeinheit (55) dazu ausgelegt ist, die Übertragungszeitverzögerung zu verwenden, um einen dritten Bewegungszustand des Schiffes um eine Gesamtzeit vorherzusagen, die sich aus dem Aufaddieren der Empfangszeitverzögerung und der Übertragungszeitverzögerung ergibt; und
wobei die Support-Informationsverarbeitungsvorrichtung (50) eine Informationsanzeigeeinheit (58) aufweist, die dazu ausgelegt ist, den dritten Bewegungszustand anzuzeigen.

2. Das Schiffsüberwachungssystem (100) nach Anspruch 1,
wobei die Zeitverzögerungsidentifikationseinheit (53) angepasst ist, um eine Zeit von der Übertragung des Schiffsmanöverbefehls von der Support-seitigen Kommunikationseinheit (52) bis zur Ausführung der Steuerung durch die Maschinensteuereinheit (17) basierend auf dem von der Support-seitigen Kommunikationseinheit (52) empfangenen Schiffsmanöverbefehl als die Übertragungszeitverzögerung zu identifizieren.

3. Das Schiffsüberwachungssystem (100) nach Anspruch 1 oder Anspruch 2,

wobei die Informationsanzeigeeinheit (58) dazu ausgebildet ist, den zweiten Bewegungszustand anzuzeigen.

4. Das Schiffsüberwachungssystem (100) nach einem der Ansprüche 1 bis 3,
wobei die Zustandsvorhersageeinheit (55) angepasst ist, um, wenn das Schiffsbewegungsmodell aktualisiert wird, den zweiten Bewegungszustand unter Verwendung des aktualisierten Schiffsbewegungsmodells vorherzusagen.

5. Das Schiffsüberwachungssystem (100) nach einem der Ansprüche 1 bis 4,
wobei das Schiffsbewegungsmodell unter Verwendung des Schiffsmanövrierbefehls aktualisiert wird.

6. Ein Verfahren für ein Schiffsüberwachungssystem (100), wobei sich das Verfahren auf ein Schiffsüberwachungssystem (100) bezieht, das enthält: eine Schiffskommunikationseinheit (10), die auf einem Schiff (1) vorgesehen ist und enthält: eine Schiffskommunikationseinheit (28) und eine Informationserfassungseinheit (21) zum Erfassen von Schiffsbewegungsinformationen, die sich auf eine Schiffsbewegung des Schiffes (1) beziehen; und eine Support-Informationsverarbeitungsvorrichtung (50), die außerhalb des Schiffes (1) vorgesehen ist und enthält: eine Support-seitige Kommunikationseinheit (52), die in der Lage ist, mit der Schiffskommunikationseinheit (28) zu kommunizieren, eine Zeitverzögerungsidentifikationseinheit (53), eine Zustandsvorhersageeinheit (55) und eine Informationsanzeigeeinheit (58); wobei
das Verfahren aufweist:

Identifizieren (S214; S413) einer Zeit von der Übertragung der Schiffsbewegungsinformationen von der Schiffskommunikationseinheit (28) bis zum Empfang der Schiffsbewegungsinformationen durch die Support-seitige Kommunikationseinheit (52) als eine Empfangszeitverzögerung; und
Eingeben (S216; S416) der Schiffsbewegungsinformationen und der Empfangszeitverzögerung in ein Schiffsbewegungsmodell, das sich auf die Schiffsbewegung des Schiffes (1) bezieht, um einen zweiten Bewegungszustand des Schiffes (1) vorherzusagen, der einem ersten Bewegungszustand des Schiffes (1), der durch die Schiffsbewegungsinformationen angezeigt wird, um eine Zeitspanne basierend auf der Empfangszeitverzögerung vorausgeht;
**dadurch gekennzeichnet, dass** das Verfahren ferner aufweist:

Erzeugen (S218; S420) eines Schiffsmanövrierbefehls;
Übertragen (S221; S423) des Schiffsmanövrierbefehls an die Schiffskommunikationseinheit (28) über die Support-seitige Kommunikationseinheit (52);
Identifizieren einer Zeit von der Übertragung des Schiffsmanövrierbefehls von der Support-seitigen Kommunikationseinheit (52) bis zum Empfang des Schiffsmanövrierbefehls durch die Schiffskommunikationseinheit (28) als eine Übertragungszeitverzögerung;
Verwenden (S417) der Sendezeitverzögerung zum Vorhersagen eines dritten Bewegungszustands des Schiffs vor dem ersten Bewegungszustand um eine Gesamtzeit, die aus dem Addieren der Empfangszeitverzögerung und der Sendezeitverzögerung abgeleitet wird; und
Anzeigen (S419) des dritten Bewegungszustands.

7. Ein Programm zur Steuerung eines Schiffsüberwachungssystems (100), wobei sich das Programm auf ein Schiffsüberwachungssystem (100) bezieht, das Folgendes aufweist: eine auf einem Schiff (1) vorgesehene Schiffskommunikationsvorrichtung (10), die eine Schiffskommunikationseinheit (28) und eine Informationsakquisitionseinheit (21) zum Erfassen von auf eine Schiffsbewegung des Schiffs (1) bezogenen Schiffsbewegungsinformationen aufweist; und eine außerhalb des Schiffs (1) vorgesehene Support-Informationsverarbeitungsvorrichtung (50), die Folgendes aufweist eine Support-seitige Kommunikationseinheit (52), die in der Lage ist, mit der Schiffskommunikationseinheit (28) zu kommunizieren, eine Zeitverzögerungsidentifikationseinheit (53), eine Zustandsvorhersageeinheit (55), und eine Informationsanzeigeeinheit (58); wobei
das Programm computerimplementierte Module aufweist, darunter:

ein Modul, das angepasst ist, um eine Zeit von der Übertragung der Schiffsbewegungsinformationen von der Schiffskommunikationseinheit (28) bis zum Empfang der Schiffsbewegungsinformationen durch die Support-seitige Kommunikationseinheit (52) als eine Empfangszeitverzögerung zu identifizieren;
ein Modul, das angepasst ist, um die Schiffsbewegungsinformationen und die Empfangszeitverzögerung in ein Schiffsbewegungsmodell einzugeben, das sich auf die Schiffsbewegung des Schiffes (1) bezieht, um einen zweiten Bewegungszustand des Schiffes (1) vorherzusagen, der einem ersten Bewegungszustand des Schiffes (1), der durch die Schiffsbewegungsinformationen angezeigt wird, um eine Zeitspanne basierend auf der Empfangszeit vorausgeht;

**dadurch gekennzeichnet, dass** die computerimplementierten Module ferner aufweisen:

ein Modul, das geeignet ist, einen Schiffsmanöverbefehl zu erzeugen;
ein Modul, das angepasst ist, um den Schiffsmanöverbefehl über die Support-seitige Kommunikationseinheit (52) an die Schiffskommunikationseinheit (28) zu übertragen;
ein Modul, das angepasst ist, um eine Zeit von der Übertragung des Schiffsmanöverbefehls von der Support-
seitigen Kommunikationseinheit (52) bis zum Empfang des Schiffsmanöverbefehls durch die Schiffskommunikationseinheit (28) als eine Übertragungszeitverzögerung zu identifizieren;
ein Modul, das dazu ausgelegt ist, die Sendezeitverzögerung zu verwenden, um einen dritten Bewegungszustand des Schiffes um eine Gesamtzeit vorauszusagen, die sich aus der Addition der Empfangszeitverzögerung und der Sendezeitverzögerung ergibt; und
ein Modul zur Anzeige des dritten Bewegungszustandes.

## Revendications

1. Système de surveillance de navire (100) comprenant :

un appareil de traitement d'informations embarqué (10) prévu sur un navire (1) et comprenant une unité de communication embarquée (28) et une unité d'acquisition d'informations (21) qui acquiert des informations de mouvement du navire liées au mouvement du navire (1); et
un appareil de traitement d'informations de support (50) prévu à l'extérieur du navire (1) et comprenant: une unité de communication côté support (52) capable de communiquer avec l'unité de communication embarquée (28); une unité d'identification de décalage temporel (53); et une unité de prédiction d'état (55);
dans lequel l'unité d'identification de décalage temporel (53) est conçue pour identifier un temps entre la transmission des informations de mouvement du navire depuis l'unité de communication embarquée (28) et la réception des informations de mouvement du navire par l'unité de communication côté support (52) comme un décalage temporel de réception, et
dans lequel l'unité de prédiction d'état (55) est conçue pour saisir les informations de mouvement du navire et le décalage de réception dans un modèle de mouvement du navire lié au mouvement du navire (1) afin de prédire un deuxième état de mouvement du navire (1) avant un premier état de mouvement du navire (1) indiqué par les informations de mouvement du navire, d'une période de temps fondée sur le décalage de réception;
**caractérisé en ce que**
l'appareil de traitement d'informations embarqué (10) comprend une unité de commande de moteur (17) conçue pour commander une machine de propulsion (74) ou une machine de gouvernail (76) prévue dans le navire (1), sur la base d'une commande de manœuvre du navire reçue via l'unité de communication embarquée (28);
dans lequel l'appareil de traitement d'informations de support (50) est conçu pour transmettre la commande de manœuvre du navire à l'unité de communication embarquée (28) via l'unité de communication de support (52);
dans lequel l'unité d'identification de décalage temporel (53) est conçue pour identifier un temps entre la transmission de la commande de manœuvre du navire depuis l'unité de communication côté assistance (52) et la réception de la commande de manœuvre du navire par l'unité de communication embarquée (28) comme un décalage temporel de transmission;
dans lequel l'unité de prédiction d'état (55) est conçue pour utiliser le décalage de transmission afin de prédire un troisième état de mouvement du navire en avant du premier état de mouvement par un temps total dérivé de l'addition du décalage de réception et du décalage de transmission; et
dans lequel l'appareil de traitement d'informations d'assistance (50) comprend une unité d'affichage d'informations (58) conçue pour afficher le troisième état de mouvement.

2. Système de surveillance de navire (100) selon la revendication 1,
dans lequel l'unité d'identification de retard (53) est conçue pour identifier un temps entre la transmission de la commande de manœuvre du navire depuis l'unité de communication côté assistance (52) et l'exécution du contrôle par l'unité de contrôle du moteur (17) sur la base de la commande de manœuvre du navire reçue par l'unité de communication côté assistance (52) comme étant le retard de transmission.

3. Système de surveillance de navire (100) selon la revendication 1 ou la revendication 2,
dans lequel l'unité d'affichage d'informations (58) est conçue pour afficher le deuxième état de mouvement.

4. Système de surveillance de navire (100) selon l'une quelconque des revendications 1 à 3,

dans lequel l'unité de prédiction d'état (55) est conçue pour prédire, lorsque le modèle de mouvement du navire est mis à jour, le deuxième état de mouvement en utilisant le modèle de mouvement du navire mis à jour.

5. Système de surveillance de navire (100) selon l'une quelconque des revendications 1 à 4, dans lequel le modèle de mouvement du navire est mis à jour en utilisant la commande de manœuvre du navire.

6. Procédé de commande pour un système de surveillance de navire (100), le procédé se rapportant à un système de surveillance de navire (100) comprenant : un appareil de traitement d'informations embarqué (10) prévu sur un navire (1) et comprenant: une unité de communication embarquée (28) et une unité d'acquisition d'informations (21) pour acquérir des informations de mouvement de navire liées à un mouvement de navire du navire (1); et un appareil de traitement d'informations de support (50) prévu à l'extérieur du navire (1) et comprenant: une unité de communication côté support (52) capable de communiquer avec l'unité de communication embarquée (28), une unité d'identification de décalage temporel (53), une unité de prédiction d'état (55) et une unité d'affichage d'informations (58); dans lequel le procédé comprend les opérations suivantes:

    identifier (S214; S413) un temps entre la transmission des informations de mouvement du navire depuis l'unité de communication embarquée (28) et la réception des informations de mouvement du navire par l'unité de communication côté support (52) en tant que décalage de réception; et

    saisir (S216; S416) les informations de mouvement du navire et le décalage de réception dans un modèle de mouvement du navire lié au mouvement du navire (1) afin de prédire un deuxième état de mouvement du navire (1) avant un premier état de mouvement du navire (1) indiqué par les informations de mouvement du navire, en fonction d'une période de temps fondée sur le décalage de réception;

    **caractérisé en ce que** le procédé comprend en outre les opérations suivantes:

        générer (S218; S420) une commande de manœuvre du navire;

        transmettre (S221; S423) la commande de manœuvre du navire à l'unité de communication embarquée (28) via l'unité de communication côté support (52);

        identifier un temps entre la transmission de la commande de manœuvre du navire depuis l'unité de communication côté assistance (52) et la réception de la commande de manœuvre du navire par l'unité de communication embarquée (28) comme un décalage de transmission;

        utiliser (S417) le décalage de transmission pour prédire un troisième état de mouvement du navire précédant le premier état de mouvement par un temps total dérivé de l'addition du décalage de réception et du décalage de transmission; et

        afficher (S419) le troisième état de mouvement.

7. Programme de commande d'un système de surveillance de navire (100), le programme relatif à un système de surveillance de navire (100) comprenant : un appareil de traitement d'informations embarqué (10) prévu sur un navire (1) et comprenant une unité de communication embarquée (28) et une unité d'acquisition d'informations (21) pour acquérir des informations de mouvement du navire relatives au mouvement du navire (1); et un appareil de traitement d'informations de support (50) prévu à l'extérieur du navire (1) et comprenant : une unité de communication côté support (52) capable de communiquer avec l'unité de communication embarquée (28), une unité d'identification de décalage temporel (53), une unité de prédiction d'état (55) et une unité d'affichage d'informations (58); dans lequel le programme comprend des modules mis en œuvre par ordinateur, comprenant :

    un module conçu pour identifier un temps entre la transmission des informations de mouvement du navire depuis l'unité de communication embarquée (28) et la réception des informations de mouvement du navire par l'unité de communication côté assistance (52) comme un décalage de réception;

    un module conçu pour saisir les informations de mouvement du navire et le décalage de réception dans un modèle de mouvement du navire lié au mouvement du navire (1) afin de prédire un deuxième état de mouvement du navire (1) avant un premier état de mouvement du navire (1) indiqué par les informations de mouvement du navire par une période de temps fondée sur le temps de réception;

    **caractérisé en ce que** les modules mis en œuvre par ordinateur comprennent en outre :

        un module conçu pour générer une commande de manœuvre du navire;

        un module conçu pour transmettre la commande de manœuvre du navire à l'unité de communication embarquée (28) via l'unité de communication côté support (52);

        un module conçu pour identifier un temps entre la transmission de la commande de manœuvre du navire depuis l'unité de communication côté assistance (52) et la réception de la commande de manœuvre du navire par l'unité de communication embarquée (28) comme un décalage de transmission;

un module conçu pour utiliser le décalage temporel de transmission afin de prédire un troisième état de mouvement du navire précédant le premier état de mouvement par un temps total dérivé de l'addition du décalage temporel de réception et du décalage temporel de transmission; et

un module pour afficher le troisième état de mouvement.

# FIG. 1

SHIPBOARD INFORMATION PROCESSING APPARATUS 10

RUDDER MACHINE 76

PROPULSION MACHINE 74

SHIP-SHORE TRANSMISSION

SHORE-SHIP TRANSMISSION

SUPPORT INFORMATION PROCESSING APPARATUS 50

EP 4 375 786 B1

# FIG. 2

1

10

100

**SHIPBOARD INFORMATION PROCESSING APPARATUS**

17
ENGINE CONTROL UNIT

21
INFORMATION
ACQUISITION UNIT

19
RUDDER MACHINE
CONTROL UNIT

76
RUDDER
MACHINE

26
STANDARD TIME
DETECTION UNIT

18
PROPULSION MACHINE
CONTROL UNIT

PROPULSION
MACHINE

74

27
MODEL GENERATION UNIT
SHIP MOTION MODEL M

29
SHIPBOARD
STORAGE UNIT

28
SHIPBOARD
COMMUNICATION UNIT

SHIP-SHORE
TRANSMISSION

SHORE-SHIP
TRANSMISSION

50

**SUPPORT INFORMATION PROCESSING APPARATUS**

52
SUPPORT SIDE
COMMUNICATION UNIT

51
STANDARD TIME
DETECTION UNIT

62
TRANSMISSION DATA
GENERATION UNIT

53
TIME LAG
IDENTIFICATION UNIT

61
SHIP MANEUVERING
COMMAND GENERATION UNIT

54
SHIP INFORMATION
PROCESSING UNIT

63
SHIP MANEUVERING
COMMAND STORAGE UNIT

55
SECOND STATE
PREDICTION UNIT

64
STORAGE UNIT
SHIP MOTION MODEL M

58
INFORMATION
DISPLAY UNIT

# FIG. 3

TRANSMIT SHIP MANEUVERING COMMAND FROM LAND SIDE

SHIP MANEUVERING OPERATION ON SHIP SIDE ACCORDING TO SHIP MANEUVERING COMMAND

SHORE-SHIP TRANSMISSION TRANSMISSION TIME LAG Δt1

ELAPSED TIME t

SHIP-SHORE TRANSMISSION RECEPTION TIME LAG Δt2

TRANSMIT SHIP MOTION INFORMATION FROM SHIP SIDE

RECEIVE SHIP MOTION INFORMATION ON LAND SIDE

EP 4 375 786 B1

# FIG. 4

# FIG. 5

PREDICTION OF SECOND MOTION STATE Q

<u>55</u>

PREDICTED RESULT

**FIRST MOTION STATE P**

SHIP SPEED

SHIP POSITION

TURNING SPEED

BOW DIRECTION

**SHIP MOTION MODEL M**

**SECOND MOTION STATE Q**

SHIP SPEED

SHIP POSITION

TURNING SPEED

BOW DIRECTION

RECEPTION TIME LAG $\Delta t2$

TIME SERIES DATA FOR SHIP
MANEUVERING COMMAND N
$(-\Delta t2 \sim 0)$

EP 4 375 786 B1

# FIG. 6

S110

START

S111 | ACQUIRE SHIP MOTION INFORMATION

S112 | GENERATE SHIP MOTION MODEL

S113 | ACQUIRE SHIP SIDE STANDARD TIME

S114 | GENERATE SHIP-SHORE TRANSMISSION DATA

S115 | TRANSMIT SHIP-SHORE TRANSMISSION DATA

# FIG. 7

START    S210

| | |
|---|---|
| S211 | RECEIVE SHIP-SHORE TRANSMISSION DATA |
| S212 | STORE SHIP MOTION MODEL |
| S213 | ACQUIRE SUPPORT SIDE STANDARD TIME |
| S214 | IDENTIFY TIME LAG |
| S215 | ACQUIRE FIRST MOTION STATE OF SHIP |
| S216 | ACQUIRE SECOND MOTION STATE OF SHIP |
| S217 | DISPLAY SECOND MOTION STATE |
| S218 | GENERATE SHIP MANEUVERING COMMAND |
| S219 | ACQUIRE SUPPORT SIDE STANDARD TIME |
| S220 | GENERATE SHORE-SHIP TRANSMISSION DATA |
| S221 | TRANSMIT SHORE-SHIP TRANSMISSION DATA |

## FIG. 8

1

100

10

### SHIPBOARD INFORMATION PROCESSING APPARATUS

17
ENGINE CONTROL UNIT

21
INFORMATION ACQUISITION UNIT

19
RUDDER MACHINE CONTROL UNIT

76
RUDDER MACHINE

18
PROPULSION MACHINE CONTROL UNIT

26
STANDARD TIME DETECTION UNIT

74
PROPULSION MACHINE

29
SHIPBOARD STORAGE UNIT

28
SHIPBOARD COMMUNICATION UNIT

SHIP-SHORE TRANSMISSION

SHORE-SHIP TRANSMISSION

50

### SUPPORT INFORMATION PROCESSING APPARATUS

52
SUPPORT SIDE COMMUNICATION UNIT

51
STANDARD TIME DETECTION UNIT

62
TRANSMISSION DATA GENERATION UNIT

53
TIME LAG IDENTIFICATION UNIT

61
SHIP MANEUVERING COMMAND GENERATION UNIT

54
SHIP INFORMATION PROCESSING UNIT

63
SHIP MANEUVERING COMMAND STORAGE UNIT

55
SECOND STATE PREDICTION UNIT

66
MODEL GENERATION UNIT

65
THIRD STATE PREDICTION UNIT

64
STORAGE UNIT SHIP MOTION MODEL M

58
INFORMATION DISPLAY UNIT

# FIG. 9

PREDICTION OF THIRD MOTION STATE R   <u>65</u>

PREDICTED RESULT

| FIRST MOTION STATE P |
| :---: |
| SHIP SPEED |
| SHIP POSITION |
| TURNING SPEED |
| BOW DIRECTION |

SHIP MOTION MODEL M

| THIRD MOTION STATE R |
| :---: |
| SHIP SPEED |
| SHIP POSITION |
| TURNING SPEED |
| BOW DIRECTION |

RECEPTION TIME LAG $\Delta t3$

TIME SERIES DATA FOR SHIP
MANEUVERING COMMAND N
$(-\Delta t3 \sim 0)$

EP 4 375 786 B1

# FIG. 10

# FIG. 11

S310

```
        ┌─────────┐
        │  START  │
        └─────────┘
             │
             │◄──────────────────────┐
             │                       │
S311  ┌──────────────────────────┐   │
      │ ACQUIRE SHIP MOTION INFORMATION │
      └──────────────────────────┘   │
             │                       │
S312  ┌──────────────────────────┐   │
      │ ACQUIRE SHIP SIDE STANDARD TIME │
      └──────────────────────────┘   │
             │                       │
S313  ┌──────────────────────────┐   │
      │ GENERATE SHIP-SHORE TRANSMISSION DATA │
      └──────────────────────────┘   │
             │                       │
S314  ┌──────────────────────────┐   │
      │ TRANSMIT SHIP-SHORE TRANSMISSION DATA │
      └──────────────────────────┘   │
             │                       │
             └───────────────────────┘
```

## FIG. 12

S410

START

S411 | RECEIVE SHIP-SHORE TRANSMISSION DATA

S412 | ACQUIRE SUPPORT SIDE STANDARD TIME

S413 | IDENTIFY TIME LAG

S414 | GENERATE SHIP MOTION MODEL

S415 | ACQUIRE FIRST MOTION STATE OF SHIP

S416 | ACQUIRE SECOND MOTION STATE OF SHIP

S417 | ACQUIRE THIRD MOTION STATE OF SHIP

S418 | DISPLAY SECOND MOTION STATE

S419 | DISPLAY THIRD MOTION STATE

S420 | GENERATE SHIP MANEUVERING COMMAND

S421 | ACQUIRE SUPPORT SIDE STANDARD TIME

S422 | GENERATE SHORE-SHIP TRANSMISSION DATA

S423 | TRANSMIT SHORE-SHIP TRANSMISSION DATA

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012018065 A

**Non-patent literature cited in the description**

- **HIROKI OTA et al.** Remote ship control system using Virtual Reality. *2022 IEEE International Conference on Systems, Man, and Cybernetics (SMC), Prague, Czech Republic*, 2022, 2223-2228